# EUROPEAN PATENT APPLICATION

(11) **EP 1 608 148 A2**
(43) Date of publication of application: **21.12.2005**
(21) Application number: 05251820.6
(22) Date of filing: 23.03.2005
(51) Int. Cl.: H04N 1/54

(54) **Prepress workflow process employing frequency modulation (FM) screening techniques**

(30) Priority: 31.03.2004 US 815154
(71) Applicant: WEYERHAEUSER COMPANY, Federal Way, WA 98063-9777 (US)
(72) Inventor: Lee, David L., Tacoma Washington 98407 (US)
(74) Representative: Bayliss, Geoffrey Cyril

(57) **Abstract**

Embodiments of the present invention include prepress workflow methods. The prepress workflow methods include generating *N* spot color separations from the color source image, wherein *N* is less than four. The *N* spot color separations, when superimposed, form a reproduction composite image similar in color to the source image. Alternatively, *N* non-process color separations obtained from Duotone, Tritone, or Quadtone images may also be employed. The methods may optionally include processing the generated *N* digital spot color separations to achieve misregistration tolerant printing prior to screening. The methods further include screening the *N* spot color separations, wherein at least one of the *N* spot color separations is screened using frequency modulation (FM).

## Description

The present invention generally relates to prepress workflow processes, and more particularly, to prepress workflow processes that include image processing and half-tone screening that employ frequency modulation (FM) techniques.

Color printing on packaging has long been considered necessary for attracting ultimate purchasers to the product. In the packaging industry, corrugated shipping containers are typically used. Corrugated shipping containers are typically constructed of unbleached Kraft papers in brown color. However, such corrugated shipping containers normally used in the packaging industry do not provide an attractive background for color printing.

Typically, an opaque black ink, occasionally with one or two other opaque ink colors, are utilized for printing on these containers. These inks are usually used to print simple illustrations consisting mostly of text, lines and solid fields in contrast to complex natural or photographic images that are intimately intermingled as they would be in a half-tone image. Some packages are formed of corrugated containerboard that has a thin white outer surface, so-called mottled white, to support more attractive color graphics. Again, printing of these packages calls for simple art consisting of text, lines and solid fields using primarily opaque inks. More sophisticated (and much more expensive) corrugated packaging may have a preprinted coated white paper laminated over most or all of the outer surface to enable higher quality graphics.

Traditional analog printing devices, such as those used to print corrugated packaging, are binary in nature; i.e. they are incapable of printing continuous-tone. More specifically, ink is either printed or not. The process of converting a continuous-tone image into a discrete, binary image (bitmap) composed of "ink" and "no ink" encoding is called half-toning or screening. A half-tone print generates the illusion of a continuous-tone image by printing very small dots not readily visible to the eye. When the eye fuses these small dots within the visual field, various shades of grey and colors can be created providing a sensation of continuous-tone.

One type of screening is called amplitude modulated (AM) screening, which relies on varying the size of the printed dot but the spacing between dots is fixed. This method, over 100 years old, is by far, the most commonly practiced technique for screening continuous-tone images. Dark or shadow portions of an image are reproduced by printing large dots, midtones with medium sized dots, and highlights with very small dots. All dots whether they are round, diamond, elliptical, square, etc. in shape, are regularly spaced according to a grid defined by the spatial frequency, i.e. the number of line pairs per inch (lpi). With AM screening, a 45 lpi screen is considered coarse because the grid is not finely spaced and the size of the smaller dots is large, hence the dots and grid structure are readily visible to the naked eye. In contrast, a 150 lpi screen is considered very fine because the grid is very closely spaced and most dots are so small, both are less visible to the naked eye.

Typically, given the equipment specifications of most flexographic presses common to the corrugated industry, the majority are unable to screen graphics beyond 65 lpi. In fact, most box plants typically screen graphics using a more realistic 40 - 50 lpi frequency range given the operational difficulties of running higher frequency screened graphics. As such, the images printed on corrugated packaging with these presses generally appear coarse, that is, they reproduce original high resolution photographic images with poor image detail.

Due to this limitation and others, there is a need in the packaging industry for low cost techniques that improve image fidelity and color reproduction, i.e. increased image detail, higher tonal resolution and range, for flexographic direct printing of corrugated media, while potentially reducing printing ink consumption. Preferably, these techniques should be used on existing printing equipment, thereby avoiding the need for costly equipment upgrades.

In accordance with aspects of the present invention, a prepress workflow method is provided. The method includes obtaining a color source image and generating *N* spot color separations from the color source image, wherein *N* is less than four. The *N* spot color separations, when superimposed, form a reproduction composite image similar in color to the color source image. The method further includes screening the *N* spot color separations, wherein at least one of the *N* spot color separations is screened using frequency modulation (FM).

In accordance with other aspects of the present invention, a prepress workflow method is provided. The method includes obtaining a color source image; generating *N* spot color separations from the color source image, wherein N is less than four; processing the generated N spot color separations to achieve printing misregistration tolerance; and screening the processed *N* spot color separations, wherein at least one of the N spot color separations are screened using frequency modulation (FM).

In accordance with yet another aspect of the present invention, a prepress workflow method is provided. The method includes generating *N* spot color separation positives of a digital source image, wherein *N* is less than four; and screening the processed *N* spot color separation positives, wherein at least one of the *N* spot color separation positives is screened using frequency modulation (FM).

In accordance with still another aspect of the present invention, a prepress workflow method is provided. The method includes preparing *N* non-process color separations from a source image; processing the *N* non-process color separations to achieve printing misregistration tolerance; and screening the *N* non-process color separations, wherein at least one of the *N* non-process color separations is screened by frequency modulation (FM).

The file of this patent contains at least one drawing executed in color. Copies of this patent or patent application publication with color drawings will be provided by the Office upon request and payment of the necessary fee. The foregoing aspects and many of the attendant advantages of this invention will become more readily appreciated by reference to the following detailed description, when taken in conjunction with the accompanying drawings, wherein
FIGURE 1 is a flow chart depicting one illustrative prepress workflow process formed in accordance with aspects of the present invention for generating half tones of n-spot color separations or separation positives that may be tolerant to misregistration;
FIGURE 2 is a flow chart depicting a spot color separation generating subprocess of FIGURE 1;
FIGURE 3 is a flow chart depicting a misregistration tolerance subprocess of FIGURE 1;
FIGURE 4 is a flow chart depicting another illustrative prepress workflow process formed in accordance with aspects of the present invention for generating half tones of N-spot color separations or separation positives;
FIGURE 5 is a sample illustration of a source image;
FIGURE 6 is a sample illustration of a CMY source image and its CMY separation positives converted from the source image of FIGURE 5 using commercially available software;
FIGURE 7 is a sample two spot color reproduction composite image and the spot color separation positives (and the C, M, or Y separations that render the spot color separation positives) that form the two spot color reproduction composite image;
FIGURE 8 is the two spot color reproduction composite from FIGURE 7 after adjustment;
FIGURE 9 is a sample two spot color reproduction composite image on unbleached Kraft, and the spot color separation positives (and the C, M, or Y separations that render the spot color separation positives) that form the two spot color reproduction composite image;
FIGURE 10 is the two spot color reproduction composite from FIGURE 9 after adjustment;
FIGURE 11 is a spot color reproduction composite on unbleached Kraft formed from mask, red and green separation positives;
FIGURES 12A-12D illustrate the CMY source image of FIGURE 6, the two spot color reproduction composite image of FIGURE 8, the two spot color reproduction composite image of FIGURE 10, and the spot color reproduction composite image with white mask of FIGURE 11;
FIGURES 13A and 13B are the spot color separation positives formed from the CMY source image of FIGURE 6;
FIGURES 14A and 14B are the spot color separation positives of FIGURES 13A and 13B, respectively, after each has been processed through an appropriate filter;
FIGURE 15 is the reproduction composite image formed from the processed spot color separations of FIGURES 14A and 14B;
FIGURES 16A and 16B are half-tone separation positives that were screened using AM techniques. Screen frequency of 45 lpi was used with round dots at 45° and 75° screen angles for the green and red separations, respectively;
FIGURE 16C is a 45 lpi half-tone composite image formed from the half-tone separation positives of FIGURES 16A and 16B;
FIGURE 16D is the two-color digitally filtered continuous-tone composite image on Kraft paper from FIGURE 15 to allow for easy comparison;
FIGURES 17A and 17B are half-tone separation positives that were screened using FM techniques;
FIGURE 17C is a 400 dpi half-tone composite image formed with the respective separation positives shown in FIGURES 17A and 17B;
FIGURE 17D is a two-color digitally filtered continuous-tone composite image on Kraft paper from FIGURE 15 to allow for easy comparison.
FIGURES 18A and 18B are HYBRID A half-tone separation positives. The luminance separation positive (green, FIGURE 18B) was FM-screened at 400 dpi while the chrominance separation positive (red, FIGURE 18A) was AM-screened at 45 lpi;
FIGURE 18C is a HYBRID A half-tone composite image formed by the respective HYBRID A half-tone separation positives shown in FIGURES 18A and 18B;
FIGURE 18D is the two-color digitally filtered composite image on Kraft paper from FIGURE 15 to allow for easy comparison.
FIGURES 19A and 19B are HYBRID B half-tone separation positives. The luminance separation positive (green, FIGURE 19B) was AM-screened at 45 lpi while the chrominance separation positive (red, FIGURE 19A) was FM-screened at 400 dpi.
FIGURE 19C is a HYBRID B half-tone composite image formed by the respective HYBRID B half-tone separation positives shown in FIGURES 19A and 19B.
FIGURE 19D is the two-color digitally filtered composite image on Kraft paper from FIGURE 15 to allow for easy comparison;
FIGURES 20A-20D compare the four screening scenarios featured in FIGURES 16-19;
FIGURE 21 is a magnified view of the center region of the AM-screened composite image of FIGURE 16C shown to highlight the differences in image sharpness, color fidelity and tonal range/resolution amongst the different screening approaches;
FIGURE 22 is a magnified view of the center region of the FM-screened composite image of FIGURE 17C shown to highlight the differences in image sharpness, color fidelity and tonal range/resolution amongst the different screening approaches;
FIGURE 23 is a magnified view of the center region of the HYBRID A-screened composite image of FIGURE 18C shown to highlight the differences in image sharpness, color fidelity and tonal range/resolution amongst the different screening approaches;
FIGURE 24 is a magnified view of the center region of the HYBRID B-screened composite image of FIGURE 19C shown to highlight the differences in image sharpness, color fidelity and tonal range/resolution amongst the different screening approaches;
FIGURE 25 is a table illustrating different screening possibilities for the general case of N color separations;
FIGURE 26 illustrates the difference between amplitude modulated (AM) and frequency modulated (FM) half-tone screening methods. Photoshop®'s error diffusion algorithm applied to illustrate FM technique;
FIGURE 27 is an illustration of contrast modulation as a function of sinusoidal test patterns of varying spatial frequencies; and
FIGURE 28 is a plot of the chromaticity and luminosity modulation transfer functions of the human visual system.

Embodiments of the present invention will now be described with reference to the accompanying drawings where like numerals correspond to like elements. Embodiments of the present invention employ frequency modulation (FM) screening techniques, also known as stochastic screening techniques, for improving image fidelity and color reproduction, i.e. increased image detail, higher tonal resolution and range especially with resolution and tone-limited, for flexographic direct printing of corrugated media. Embodiments of the present invention are directed to image processing techniques for achieving higher print resolution, greater tonal range and resolution of *N*-spot color separations (preferably where *N* < 4) than what is achievable using amplitude modulation (AM) screening techniques on existing equipment. Several embodiments of the present invention are directed to image processing methods that also produce a reproduction composite image that is tolerant to misregistration when generated with non-process spot color separations. Further, embodiments of the present invention provide prepress workflow methods that offer low-cost software solutions for increasing print reproduction quality of existing printing presses, thereby minimizing or avoiding the need for costly equipment upgrades or hardware solutions.

### A. General Terms and Phrases

In the description that follows, terms such as "record", "separation", and "channels" will be to some extent be used interchangeably. The term "image record" dates back to the earlier days of process printing when half tone printing plates were derived photographically using contact negatives. Color produced by devices or objects that emit or generate their own light (the sun, TV, etc.) is referred to as an additive color system. Red, green, and blue are known as the additive primaries. By mixing various amounts of these primaries an incredibly large number of colors can be generated and distinguished. A scene or image was recorded by taking separate photographs through red, green, and blue filters. These provided negative greyscale records of the spectral components. For example, the red record (negative) defined the amount and location of cyan ink (complimentary to red) to be printed. Similarly, the positive of the red record encoded the location and amount of red light being reflected by objects in the original scene. A fourth image provided a record for application of black ink, where that was also used. The three film negatives, referred to as "separations" were then used to prepare printing plates for the cyan, magenta, and yellow inks generally known as "process primaries". These colors, complementary to the red, green, and blue primaries are referred to as "subtractive colors" since they "subtract" or remove by absorption the other colors from the light striking them and reflect or pass only their own color. When colors are produced by objects that do not emit light on their own; i.e., require illumination to be seen, the system is referred to as a subtractive system. This includes virtually all objects viewed by our eyes.

The three subtractive colors, placed one above the other as transparencies, nominally produce black. On the other hand the subtractive primaries can produce additive colors when in an overlapping arrangement. Thus, red can be produced by a mixture of cyan and magenta, blue from a similar mixture of magenta and yellow, and green from cyan and yellow. While judicious overprinting of cyan, magenta, and yellow inks can produce a nominal red, green, and blue, it is well known in the printing arts that the size of the color gamut of subtractive primaries used in printing inks is considerably smaller than the gamut of colors defined by the additive primaries.

In many cases CMY ink separations will also be used with a black separation since ink imperfections tend to result in muddy blacks rather than jet blacks when all three inks are overprinted. In this case the separations are referred to as CMYK, the black channel being designated K in order not to confuse it with blue.

Electronic digital imaging has changed the aforementioned techniques considerably, thus it has became necessary when using digital images to encode color information using an additive system. Images in such devices as scanners and digital cameras are captured by a myriad of minute sensors equipped with equal numbers of red, green, and blue filters. However, these systems record image positives, in contrast to image negatives on film. The three filters decompose the image into three greyscale positives, usually referred to as "separation positives" or "channels". If each separation positive or channel was inverted to a negative, then they would render separations for cyan, magenta, and yellow inks, the so-called "process primaries". Throughout the description that follows "separations" will refer to image negatives while "separation positives" and "channels" will refer to image positives. The negatives serve as an encoding record for cyan, magenta, and yellow inks while the positives serve as red, green, and blue records.

Specifically, the term "separation positive" is used throughout the specification. As was described above, separation positives are analogous to channels and are referred to in the illustrative examples herein when the images are processed using suitable image processing software, such as Adobe Photoshop®, in an additive computer system. However, the methods of the present invention hereinafter described apply generally to all systems, and therefore, may alternatively be employed in a subtractive system or workflow process.

As well known in the art, separation positives or channels may be haft-tone screened, and then inverted to create their respective negative (separation) suitable for use in preparing printing plates for a conventional printing press. Alternatively, final separations (negatives) may be generated by inverting separation positives or channels prior to being half-toned screened. The terms "screening", half-toning", and "half-tone screening" are considered equivalents, and thus have been used interchangeably throughout the specification. These terms generally mean the process of converting a continuous-tone image into a discrete, binary image (bitmap) composed of "ink" and "no ink" encoding for use on analog printing devices.

The term "misregister" and "misregistration" should be considered as equivalent to the image processing term "image phase error."

Embodiments of the present invention may be used with two transparent inks. Characteristics that constitute ink transparency are defined in ISO publications ISO 2846-1 through ISO 2846-5. Embodiments of the present invention are not in any way limited to the use of either CMY process inks or inks that simulate the additive RGB colors. These and other inks of any other available color may be used.

### B. Illustrative Embodiments of the Present Invention

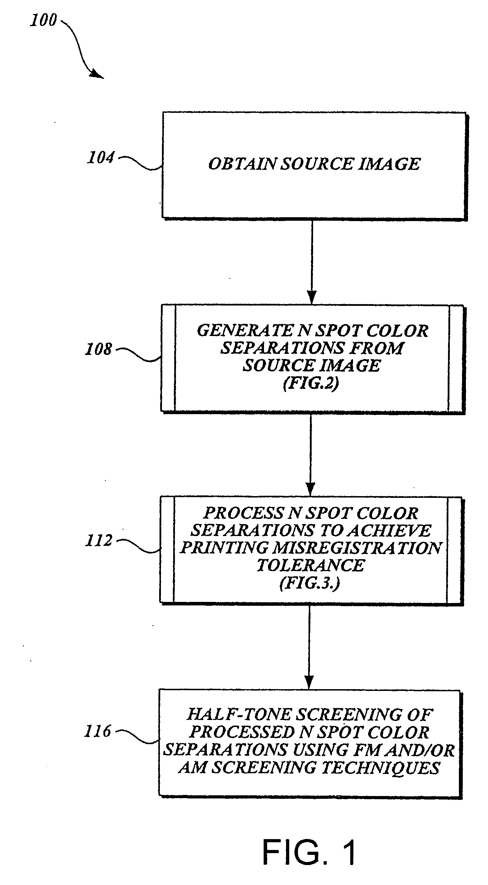

FIGURE 1 is a flow diagram depicting one exemplary prepress workflow process, generally designated 100, which is formed in accordance with aspects of the present invention for generating half-tone screens of *N* spot color separations or separation positives that may be tolerant to misregistration. The generated half-toned screens achieve higher print resolution and tonal range and resolution than what is commonly obtainable using conventional screening techniques and achieve higher print resolution with ink separations that remain tolerant to misregistration when printed. Embodiments of the process 100 provide a software implementation that increases print bandwidth (image information) of existing printing equipment, thereby eliminating the need for expensive hardware upgrades. Embodiments of the process 100 further provide a process for elevating overall image quality of print reproduction aimed at eliminating moire, minimizing visible dot patterns, tonal jump, coarse tonal rendering, while maximizing image sharpness.

As best shown in FIGURE 1, the prepress workflow process 100 begins at block 104, where an original, full-color composite image, i.e. a "source" image that would typically be reproduced using a four-color process printing, is obtained. For example, the source image may be a natural scene containing complex content, e.g. a photographic image in contrast to simple line art or drawn illustrations. The source image may be any conventionally encoded digital image, preferably 8 or 16 bit, in one of many color image formats, such as "RGB" (a 3-color system including red ("R"), green ("G"), and blue ("B ")), "CMY" (a 3-color system including cyan ("C"), magenta ("M"), and yellow ("Y")), or "CMYK" (a 4-color system including the "CMY" colors and black ("K")). The source image can be transferred as a digital image into the computer memory of an image processing computer system using any one of numerous means of transferring a document into computer memory.

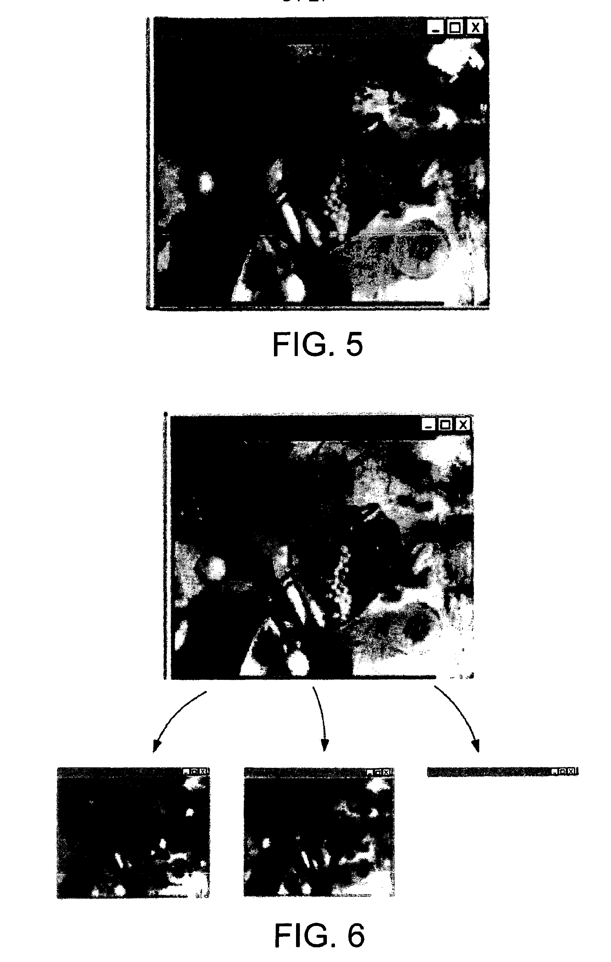

For example, the source image may be downloaded from a secondary source, such as the Internet, a CD-ROM, or a digital camera. Alternatively, the source image may be created in the computer system by using a commercially available design program, such as Adobe lllustrator® or Macromedia Freehand®. The source image may also be obtained by digitally scanning a printed image using a scanner and an associated computer system both well known in the art. In the illustrative examples hereinafter described, the source image is an RBG encoded digital image capable of being viewed on an additive color system using a computer with a CRT monitor or equivalent display device. As best shown in FIGURE 5, the source image depicts mixed fruit on a pale yellow cloth with blue and white napkins will be used as the source image. As can be seen, the dominant colors are green, red, and brown although small areas of yellow, blue, white, and black are present.

The process 100 proceeds to block 108, where *N* spot color separations (*N*<4) are generated from the source image, as will be described in more detail below. The *N* spot color separations, when superimposed, render a realistic reproduction composite image of the source image. After the *N* spot color separations are generated, the *N* spot color separations may then be further processed at block 112 to achieve misregistration tolerance for the reproduction composite image, as will be described in more detail below. In the misregistration tolerance subprocess, one of the spot color separations is classified as "luminance", and filtered accordingly, while the remaining *N*-1 separations are classified as "chrominance" and filtered accordingly. Next, the process 100 proceeds to block 116, where the processed spot color separations are half-toned screened using either AM screening techniques, FM screening techniques, of combinations thereof. When the process 100 is completed, the resultant half-toned screened separations may be suitable for preparing plates for printing.

As was mentioned earlier, traditional printing presses are binary, and thus, continuous tone images must be converted into a format that may be printed. This conversion is known as half-tone screening. There are two principal methods for generating a half-tone image. The conventional method referred to as amplitude modulated screening, relies on varying the size of the printed dot but the spacing between dots is fixed. This method, over 100 years old, is by far, the most commonly practiced technique for screening continuous-tone images. Dark or shadow portions of an image are reproduced by printing large dots, midtones with medium sized dots, and highlights with very small dots. All dots whether they are round, diamond, elliptical, square, etc. in shape, are regularly spaced according to a grid defined by the spatial frequency, i.e. the number of line pairs per inch (lpi). A 45 lpi screen is considered coarse because the grid is not finely spaced and the size of even the smaller dots is large, hence the dots and grid structure are readily visible to the naked eye. In contrast, a 150 lpi screen is considered very fine because the grid is very closely spaced and most dots are so small, both are less visible to the naked eye.

A second and more recent technique can generally be classified as frequency modulated screening. The basic principle behind this method is the distance between dots is randomly varied or dispersed according to various placement schemes but the fundamental size of the addressable dot (imaging element) remains fixed. There are many algorithms for implementing such variations of this technique. Today, this subject area has generated enormous interest and intensive research efforts. The primary advantages to FM or stochastic screening are: no visible dot pattern, no moiré patterns, no tradeoff between tone level and frequency, no jumps in tone gradation, higher tonal resolution, and less need for edge sharpening.

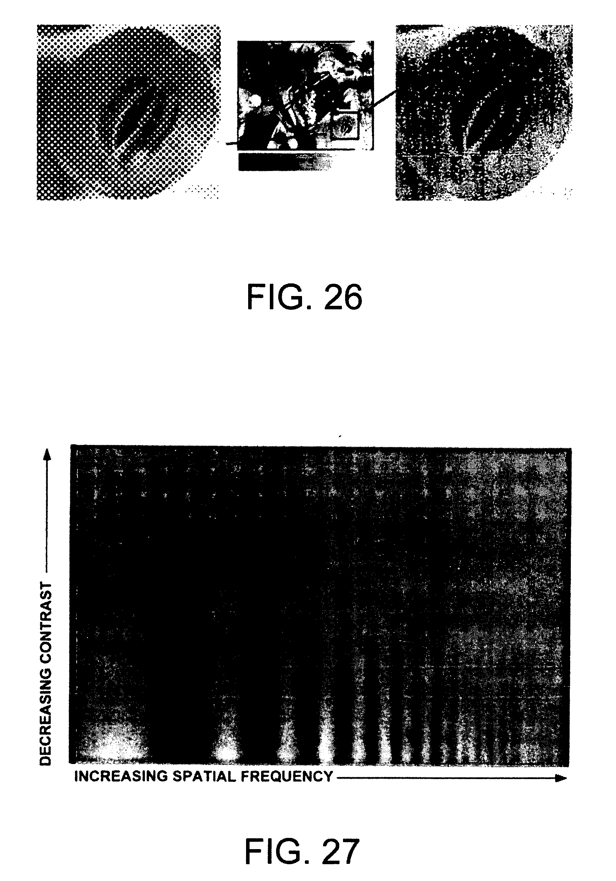

FIGURE 26 illustrates the difference between amplitude modulated (AM) and frequency modulated (FM) half-tone screening methods. Photoshop®'s error diffusion algorithm has been applied to illustrate all FM-screening scenarios. In this example, the magnified view of the cantaloupe on the left is an AM-screened rendering of a color separation from the still life of fruit image (center). Adobe Photoshop® 6 was use to simulate round dots using a screen frequency of 45 lpi and a screen angle of 45° for the luminance separation positive (green) and 75° for the chrominance separation positive (red). The separations and composites were rendered at 400 pixels per inch. Similarly, the magnified image on the right is an FM rendering using square dots of the same region of interest using a dot dimension of 0.00248" (about 400 dpi). Embodiments of the present invention employ square dots because Photoshop® uses error diffusion, which utilizes square dots.

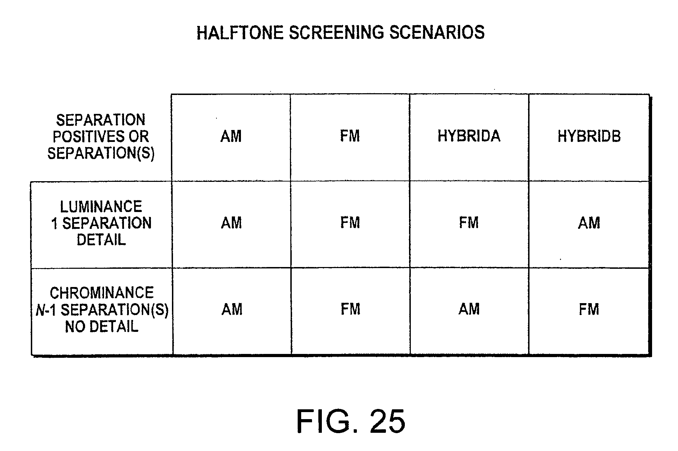

FIGURE 25 is a matrix illustrating the possible screening scenarios for the general case of n spot color separations using AM and/or FM screening techniques in accordance with aspects of the present invention. While the discussion will be limited to a two-spot color separation case *(N* = 2), without loss of generality, the approach would apply with *N* > 2 separations. For example, with 3 or more separations, one of the *N* separations would be designated the luminance separation, i.e. the detail-carrying separation, while the remaining N-1 separations would all be classified as chrominance separations, i.e. "color-only with no detail" separations, as will be described in more detail below with reference to FIGURE 3. Given this classification regime, there are four basic screening scenarios, all conventional or AM, all stochastic or FM, and two hybrid cases where both screening methodologies are applied depending on how the luminance and chrominance separations are to be treated. While it is true that more screening combinations theoretically exist for the *N*-1 chrominance separations specifically when *N* > 2, for simplicity, we have omitted such discussion. However, such screening combinations under certain images and certain situations are considered to be within the scope of the present invention.

While the FM or stochastic screening examples described herein employ an error diffusion algorithm, other well known and future developed algorithms be alternatively be used. For example, there are many algorithms for implementing some variant of FM screening, for example noise encoding, dispersed-dot-ordered-dither, microcluster half-toning, error diffusion, modified error diffusion, blue noise masks, and multilevel half-toning to name a few.

Embodiments of the present invention have numerous uses, one involving flexographic printing of reproduction composite images on corrugated media. As such, it should be noted that in flexographic printing of corrugated board, AM dot percentages much lower than 5% can not be printed because in practice, such small dots can not be "burned" or held in the printing plate. Given their small size, generally speaking, dots below 5% simply do not exist after exposure and fixing of the polymer. While a few may be present, those are easily damaged or break off during the printing operation, hence for all practical purposes, typical flexographic plates are incapable of reproducing half-tone dots below the so-called "minimum dot" size. While the minimum dot limit varies with equipment, in general, this dot percentage is roughly on the order of 5%. Furthermore, since the typical 5% dot on plate will easily grow to 12% - 15% on paper, highlights are difficult to render since grey levels in the print will jump from 0% (white or paper) to 15% (the lightest grey possible). Consequently, to dampen this effect, it is common to correct ink percentages for each separation so they run from 5% - 100% rather than from 1% - 100%. Remapping of ink percentages avoids objectionable tonal contouring in image highlights.

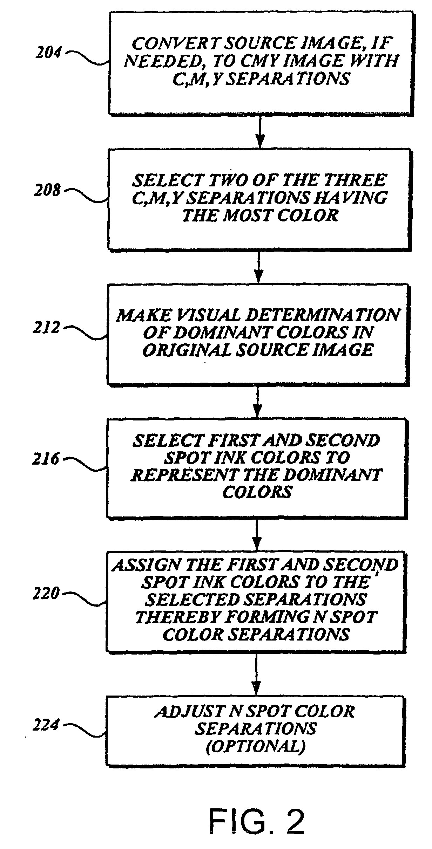

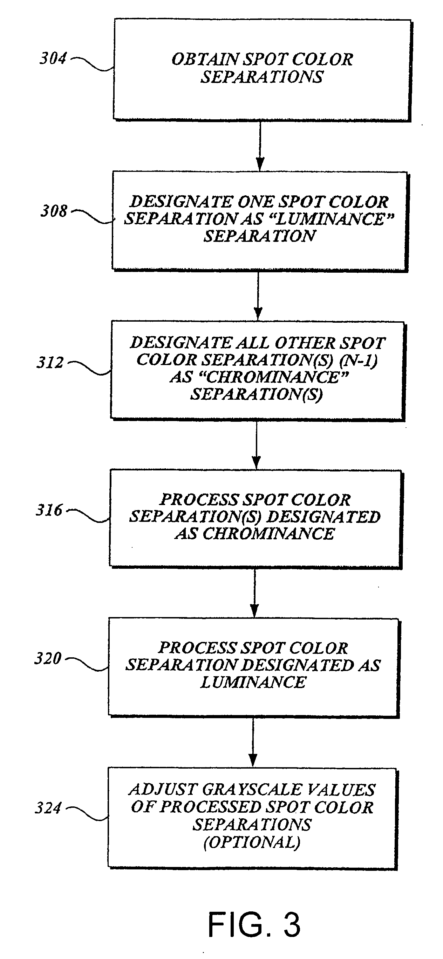

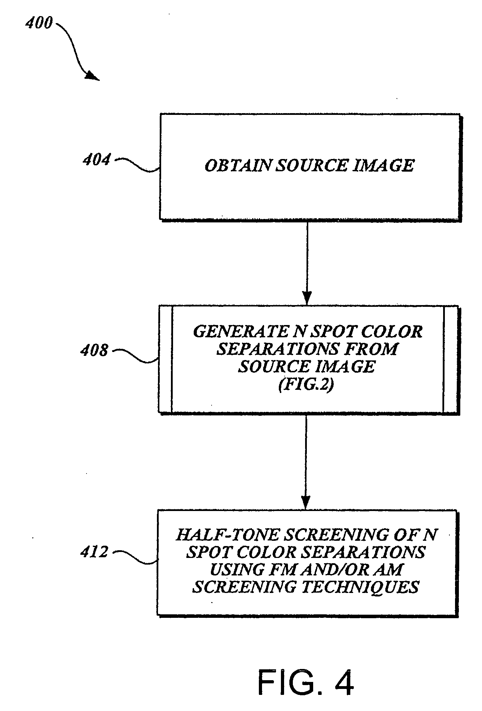

Referring now to FIGURE 2, an illustrative subprocess 200 for generating n-spot color separations will be described in detail. The routine 200 begins at block 204 where the red, green and blue encoded source image is converted to an cyan, magenta, and yellow (CMY) encoded source image (hereinafter "CMY source image") and its associated separations. In one embodiment, the RGB source image may be readily converted to a CMY source image using complimentary mapping techniques. Alternatively, the source image may be converted to other formats, such as a CIE L*a*b* format, using encoding techniques such as look-up table mapping. Complementary mapping generally refers to the color(s) a filter of a given color absorbs. For example, since a red filter passes red (R) light but blocks green and blue light, its complement; i.e., 1-R, yields the amount of non-red light, which is essentially green and blue. Cyan light is a mixture of green and blue light. Look-up table mapping generally refers to the relationship between RGB and CIE L*a*b* color. Because RGB is a device dependent encoding method, a given RGB triple is associated with a specific L*a*b* color coordinate under an empirical mapping system. It will be apparent that this conversion may be omitted if the source image is obtained in CMY color format.

In one working embodiment of the present invention, after obtaining the source image by, for example, any manner described above, the source image may be imported into an image processing software program, such as Adobe Photoshop®, executed on a well known computer system. The image processing software program, when executed, enables the source image to be processed according to user selected commands. The source image may then be converted by Photoshop® into the CMY source image by a mode change. The processing software re-expresses the original RGB encoded source image in CMY units; i.e., it yields a CMY source image and three ink separation positives of the source image for the cyan, magenta, and yellow inks (C, M, Y separation positives). FIGURE 6 illustrates a CMY source image as well as the cyan, magenta, and yellow separation positives generated in Photoshop®. Other suitable software programs that may be employed to convert the RGB source image into an CMY encoded image and its associated separation positives are Adobe lllustrator®, QuarkXPress™, available from Quark, Inc. Denver CO; CorelDRAW® and other packages, available from Corel Corp., Ottawa, Ontario; and Paint Shop Pro, a shareware program available on the Internet.

It will be appreciated that the RGB source image may be optionally adjusted prior to CMY conversion. For example, visual adjustments of contrast, tonal value, brightness, and color balance may be accomplished using the commercially available software programs mentioned above, other known or future developed software, or by other known methods.

After the source image is converted into a CMY source image, the process 200 proceeds to block 208 where two CMY separations (i.e. CM, CY, MY), which are considered to be carrying the most important color information of the source image out of the three generated separations, are visually chosen. For instance, in an example illustrated in FIGURE 6, the user may look at the generated separation positives displayed on the computer display device and visually determine which two separation positives of the CMY separation positives convey the most color information with respect to the original source image. Typically, this will be the cyan and magenta separations since they typically convey at least about 60-70% or more of the color information. However, other occasions will arise when the yellow separation would be an essential separation to choose. The ultimate choice is typically scene-dependent, and may be somewhat subjective. As is immediately apparent, the cyan and magenta separation positives of FIGURE 6 are the most important to the overall source image.

The original source image is then inspected by the user at block 212 to determine dominant object colors or other important features critical to the visual impact of the source image. In like manner, areas of the original source image that are not of significant importance that could possibly be rendered in another color are noted. It should be noted that while in most cases it is desired to replicate the original colors as closely as possible, situations can arise when considerable departures may be preferred. This is a choice that may be made by the user depending on the final effect he or she is attempting to achieve. From a review of FIGURE 5, the red and green fruits, yellow bananas and lemon, and brown background objects, possible choices for the dominant colors may be either red/green or magenta/cyan.

The process 200 continues from block 212 to block 216, where first and second transparent spot ink colors, which will represent the selected dominant object colors with suitable accuracy, are chosen from an ink color palette or color swatches. These usually are "memory colors" or colors that represent specific objects that must be reproduced for the reproduction to appear realistic; e.g., it is desirable that bananas should be yellow. Spot colors might be a green and a red, a red and blue, a yellow and blue, etc. While any color ink can be used with a given separation, preferably there is some agreement of the ink color used to print the separation and the color that separation represents. For example, given a cyan separation, reasonable ink choices would be some variation of a cyan, blue, or green, i.e. a "cool" ink. Similarly, reasonable candidates for the magenta separation would be red, magenta or orange, i.e. a "warm", color. The yellow separation would typically be a yellow, green, or red ink. Since a red separation tells us where and how much red ink to print, straying too far from a red ink may yield poor results, especially if accurate reproduction is the goal. It should be noted that purposely mismatching color with a separation can lead to interesting and useful effects, therefore this technique should be considered to be within the scope of the invention.

In an illustrative example, red and green ink colors were selected since these were considered important memory colors. Specifically, for the source image of FIGURE 5, PANTONE Red 032 and PANTONE Green 360 have been selected from the ink palette for the magenta and cyan separations of FIGURE 6, respectively. If magenta and cyan inks were chosen instead in this example, it may have been difficult to render true reds and greens of the original source image without a yellow ink also being present. Further, it is important for the chosen inks to be able to render a reasonably good gray or black. The luminance component (black and white signal) can also be extremely important. Poor grays may make some systems unusable despite the pairs being able to render a large color gamut.

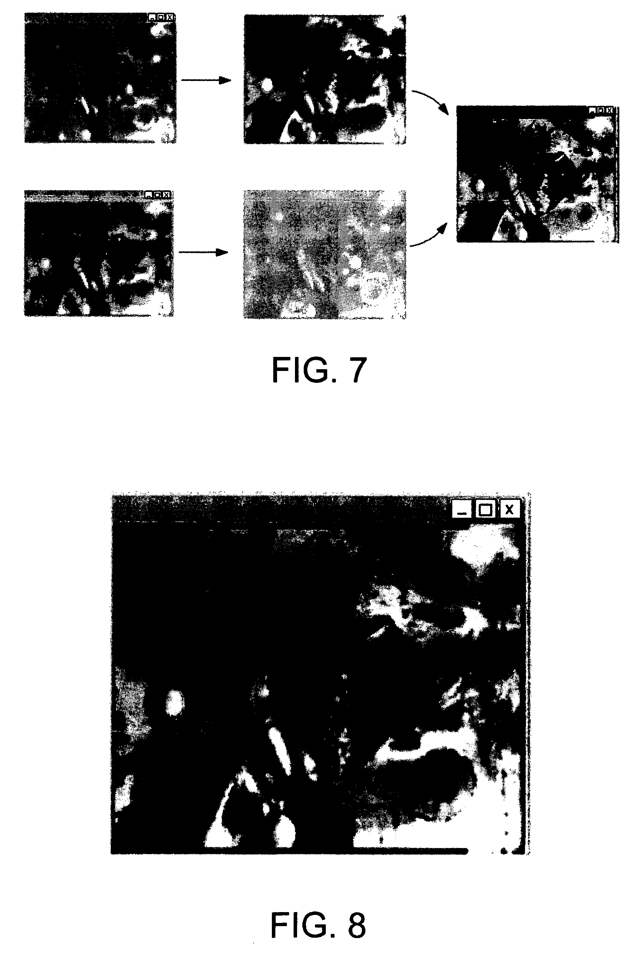

Once the first and second spot ink colors are chosen, each are assigned to one of the two selected CMY separations at block 220, typically assigning each spot ink color to the selected separation having the most agreement therebetween. In an illustrative example, PANTONE Red 032 and PANTONE Green 360 are assigned to the magenta and cyan separation positives, respectively. The separations are then rendered in the chosen spot colors (referred herein as "spot color separations"). In the illustrative example, this is best shown in FIGURE 7 where the separation positives are rendered red and green. This may occur automatically when the colors are assigned to the separation positives, or may be a user initiated command. The unselected separation, in this case yellow, may remain unused, or as will be explained later, may be used to carry a masking color.

From block 216, the spot color separations are superimposed to form a reproduction composite image. In the illustrative example, the image at the far right in FIGURE 7 depicts the reproduction composite image formed by the red and green spot color separation positives. The reproduction composite image may then be inspected and adjustments may be made at block 224, if desired.

For example, global and local adjustments may optionally be made in the greyscale values of each spot color separation positive. Other adjustments may also be made again for contrast, tone, and brightness in these new spot color separation positives. This will effectively control the amounts of each ink to be applied in order to produce a color result most closely representing the ultimately desired image adjustment is achieved by greyscale manipulation. Essentially, this means increasing or decreasing the overall greyscale image density to ultimately result in a greater or lesser amount of ink of the chosen color being applied. This adjustment may be either global or local or both. Global adjustment results in varying density of the overall image whereas local adjustment refers to varying density only in a predefined area. These adjustments are well within the capability of the commercially available software programs. FIGURE 8 depicts the reproduction composite image of FIGURE 7 after these adjustments were made. By this means, the user has considerable latitude over reproduction of the overall scene as well as the color of specific objects within the scene.

As seen in the far right image of FIGURE 7, the reproduction composite image without any greyscale adjustment gives a reasonable rendition of the original image. Globally adjusting the greyscale values of the two selected spot color separation positives as shown in FIGURE 8 improves the greens and lightens the table cloth. Local greyscale adjustment of the originally blue fabric at the bottom renders it in a pleasing green. While not true to the original color, this was regarded as a relatively unimportant part of the original image. The fruit was the important portion of the image and, except for lighter yellows of the bananas and lemon, is entirely believable. It is important to remember that this was done using only two inks and would ultimately greatly simplify printing and ink costs where precise fidelity to the original was not essential.

If the reproduction composite image is not accurate enough to the user when compared to the source image, other colors may be chosen at this time and the aforementioned steps, shown in blocks 216-224, may be repeated. The phrase "accurate enough" used in the previous sentence should be considered very subjective. Since no two spot color reproduction composite image can reproduce every color in the original with absolute accuracy, accurate enough should be considered to mean "realistic", "esthetically pleasing", or "acceptable for the intended purpose". The technique relies considerably on subjective evaluation for deriving suitable separations.

While embodiments of the present invention are operable using only CMY separations, it may be preferred to also make RGB separations. With six separations, the choices for combining two separations are expanded from three (CM, CY, and MY), when using only CMY, to fifteen with CMY and RGB. It will also be readily apparent that in principle, many more ink separations could be produced for specific colors other than RGB and CMY (for example orange). In practice this is not necessary. These six separations reduce the incredibly large number of possible separations to a reasonable, workable number. This is possible because a six-separation color architecture is a good approximation of the intermediate colors lying between any two separation colors; e.g., orange lies between yellow and red. In the above example a yellow or red separation approximates an orange separation. Given their close proximity, either could be rendered with an orange ink despite the fact that we lack the orange separation. Visual adjustments of the greyscale effectively modifies the yellow or red separation to produce an acceptable orange separation. Viewed in this manner, the six proposed separations serve as initial separations from which final ink separations for a unique color can be visually created by global and local manipulation of that channel's greyscale.

Embodiments of the present invention are also useful for printing on substrates of most colors with the exception of dark greys and black. Even black medium can be used if a third masking separations is added. Substrate color may be simulated as a temporary third spot color separations. This color separation will not ultimately be printed, however. Instead, it will serve to enable additional greyscale adjustment of the original two spot color separations. These can be manipulated to offset, or in some instances to take advantage, of the substrate color. For example, printing on a non-white substrate generally calls for reducing the overall ink amounts since not making this correction often yields a dark reproduction. In some cases the substrate can provide a useful and "free" third color, which can be exploited to improve the color gamut for the ultimate image. In effect, this creates a third separation that allows the substrate's color to contribute to the overall color of the reproduction composite image.

For example, the adjusted image of FIGURE 8 is shown printed on a white substrate. Often printing to a white substrate is not possible, the brown color of unbleached Kraft corrugated containers being a prime example. This so-called brownboard is formed from unbleached Kraft liner plies enclosing a corrugated interior ply. To date these containers have almost universally been printed with opaque inks and relatively simple imagery consisting of text, line, and simple colored fields. Using embodiments of the present invention, attractive, continuous tone, photographic-like images can now be printed on Kraft or other substrates, regardless of the medium's color.

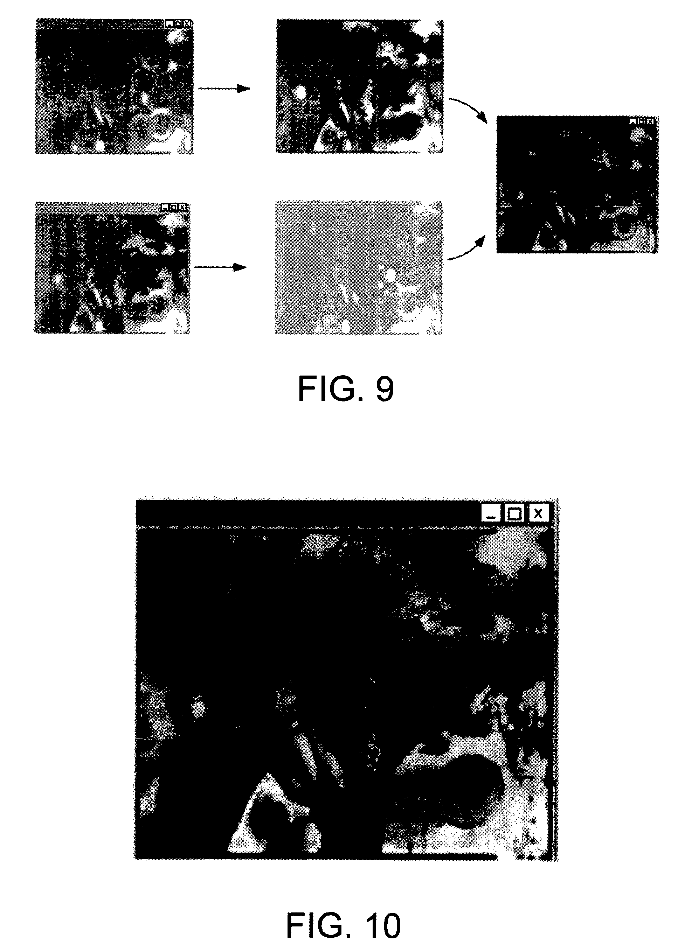

The far right image in FIGURE 9 depicts how the adjusted image of FIGURE 8 would appear if printed on an unbleached Kraft paper. In an illustrative embodiment, paper color is simulated by using PANTONE 465 in the third (or yellow) and previously unused separation positive of the original CMY source image and combining it with the other two spot color separation positives. Note that this is not a conventional three-color "process". The third separation positive will not be printed but is added solely for the purpose of adjusting the greyscale values of the other two separation positives, simulating the presence of a dark or non-white substrate. The original red and green separation positives can be once again adjusted to give the most pleasing rendition on the Kraft substrate. In principle, any number of additional spot channels can be created for such purposes, i.e. to simulate substrate color and texture (separations not printed) or for masking channels (separations printed), or other desired effects to help generate separations.

The final result may be seen in FIGURE 10. The color of the Kraft paper is actually used to advantage since it restores some of the yellows missing from the image shown in FIGURE 8, printed on white paper. Again, it is important to remember that the wide range of believable colors achieved on the fruits and background has been achieved by using only two overprinted transparent inks. The bananas in the reproduction composite image in FIGURE 10 look yellower than the equivalent image in FIGURE 8 since a weak yellow is contributed by the unbleached Kraft paper. Note that the white cloth left of center at the bottom continues to appear "white" to the eye, even though the system is incapable of producing a white color. This is because the lightest color that can be reproduced is the brown of the substrate, achieved when no ink is deposited.

Where more precise or more dynamic color reproduction might be needed on colored substrates, it is within the scope of the invention to use a third separation to introduce an initially printed masking separation rendered with an opaque ink. While this might be any color, the masking image would most usually be printed with a white ink. The two color separations conveying the important color information in the source image have already largely been determined and attention now focuses on the procedure for finding a suitable separation to serve as a candidate separation to render the masking color.

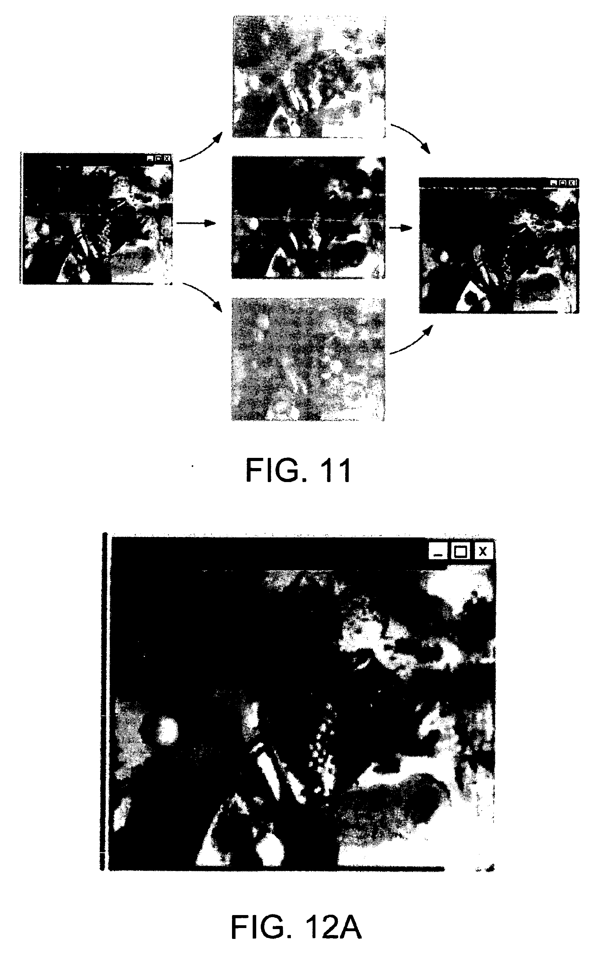

In an illustrative example, the RGB original source image may be obtained and converted into CIE L*a*b* mode using Photoshop®. This operation is a look-up table conversion implemented in commercial software, such as Photoshop®, which maps RGB colors to their associated CIE L*a*b* color specifications and *vice versa.* Only the L* or darkness/lightness separation positive will be used. The L* separation positive encodes the achromatic black to white information in the scene (all object information is present). It is a logical choice for rendering the masking separation positive. It is a logical choice for rendering write the masking separation positive. This is used to create a third spot color separation positive to simulate the masking ink being printed on the colored substrate. If using Adobe Photoshop® or similar software, the L* separation positive is pasted into a new frame which, for present purposes, might be labeled "White Mask". This will be the initial separation positive for recording the opaque white ink that will be printed first. Once the L* lightness separation positive has been pasted, this separation positive is then rendered with a spot color approximating the color of the substrate. In an illustrative example, it is again PANTONE Brown 465, as shown in the separation positive at the top of FIGURE 11. The remaining separation positives are again the earlier ones containing separation positives for Green 360 and Red 032 inks.

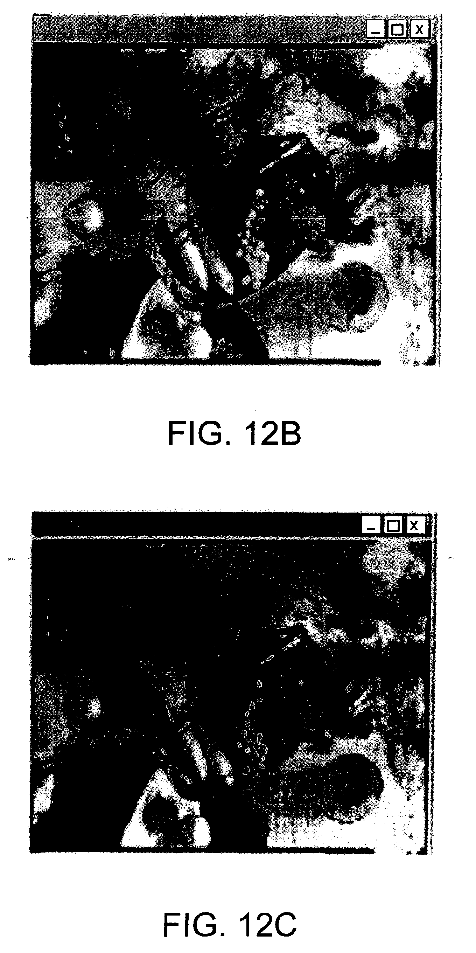

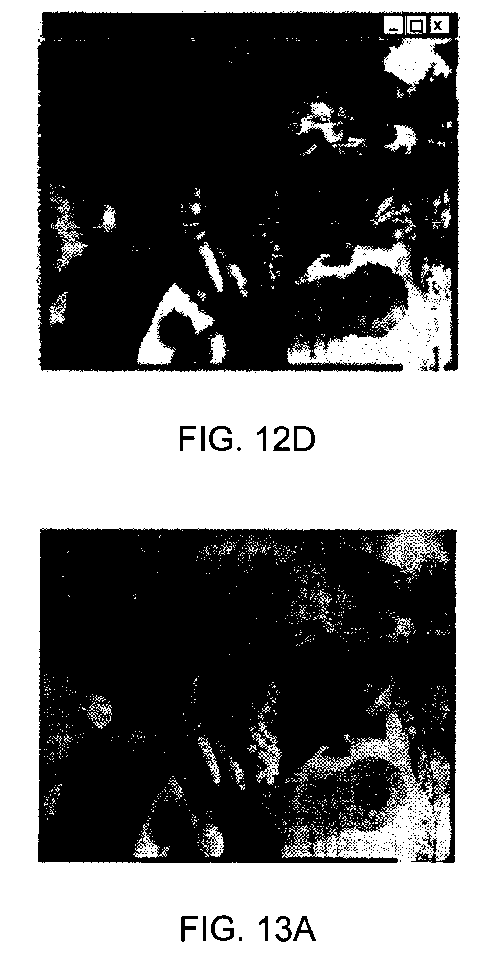

Optionally, global and local greyscale adjustments in the White Mask separation positive may be made. The amount of white ink can be increased in areas where high lightness is needed. In shadow areas, white ink may be removed to achieve lower luminance. The resultant printed image is seen in FIGURES 11 and 12D on unbleached Kraft stock where the opaque white mask is under-printed before the transparent red and green inks are laid down. The high brightness of the white ink helps to overcome or mask the darkening effect of the Kraft substrate.

FIGURES 12B-12D shows side-by-side images of the two-color rendition on white and Kraft stocks, taken from FIGURES 8 and 10, with the white masked image on Kraft stock of FIGURE 11.

An alternative procedure that on occasions will be useful is to print the opaque masking separation after the two transparent inks have been printed. For example, a localized area of the reproduction composite image might be overprinted with a special spot color, fluorescent or metallic ink, varnish, or any other type of ink to achieve some particular effect.

Once all optional greyscale adjustments to the spot color separations are complete at block 224 of routine 200, and the two-color reproduction composite image renders realistically, the spot ink color separations may be further processed using a misregistration tolerance subprocess 300, as will be described in detail below.

As is well known, the need to hold tight register between either the printing plates on press or various marking engines inherent with the device, e.g. a digital printer (ink, toner, wax, etc.) is common to all color reproduction processes and/or devices. This requirement has been a necessary pre-requisite since the invention of printing and all its manifest forms including photography, television, and modem digital imaging devices. Even a small displacement (say 1/32") in any one separation or channel is detrimental to the composite image and usually such misregister leads to an unsatisfactory reproduction since unpleasant or undesirable visual artifacts tend to render the print unusable or severely degrade image quality.

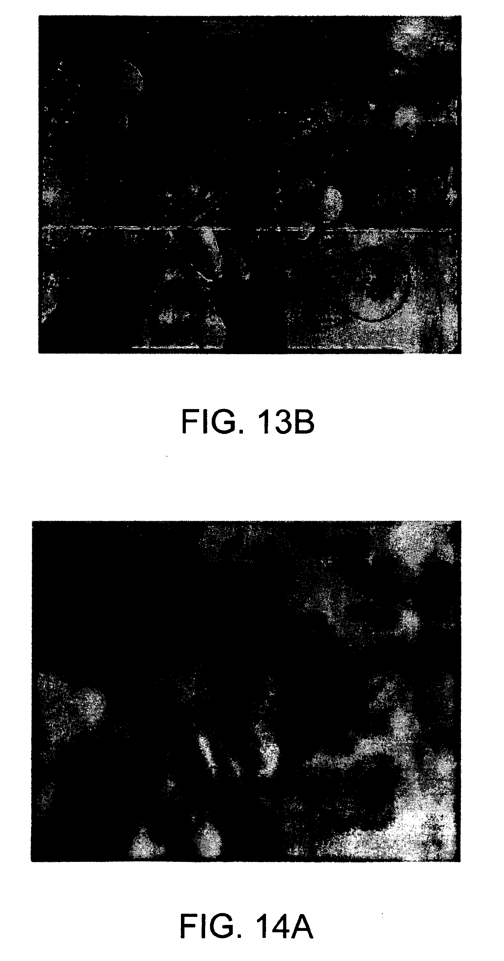

To that end, an illustrative misregistration tolerance subprocess 300 for making spot color separations tolerant or having increased tolerance for color misregistration when the reproduction composite image is printed will now be described in detail with reference to FIGURE 3. While the discussion focuses on subprocess 300 being applied to spot color separations, it is within the scope of the present invention that the same techniques could be applied to process color separations and higher order separation architectures. The routine 300 begins at block 304 where the spot color separations from the subprocess 200 are obtained. Next, at block 308, one of the spot color separations is designated as the "luminance" separation. This separation serves as an achromatic representation of the source image. When the spot color separations are equal to or greater than 4 under either process printing or higher order printing architectures, the usual choice is to assign luminance to the black separation. However, in embodiments of the present invention with two spot color separations, there is greater latitude as to which of the two spot color separations to choose to encode luminance since black is not one of the color separations. For example, in the illustrative example shown in FIGURES 13A and 13B that include the red and green spot color separations of the reproduction composite image, the spot color separation which is seep visually to carry the most important luminance information assumes the role of a surrogate black separation. As such, in the illustrative example, the green spot color separation is chosen as the surrogate color separation in lieu of black. The other spot color separation is designated the "chrominance" separation in block 312. In the illustrative example shown in FIGURES 13A and 13B, the red spot color separation (FIGURE 13A) is designated as a chrominance separation.

In a typical three ink scenario, the third color is often black and the black separation becomes the natural choice. However, if black is not one of the three inks to be used, the color separation which carries the bulk of the image luminance is selected, as was the case with the two color example. Usually this will also imply that the darkest ink of the three would be designated as the surrogate black separation.

The process then proceeds to block 316, where the spot color separations designated as "chrominance" are passed through a low pass filter to degrade object (image or scene) detail. This may be done by the use of a blurring algorithm; i.e., generally implemented in the spatial domain by using an appropriately sized convolution kernel. The blurring algorithm is typically a Gaussian filter although it is not so restricted. The amount of image degradation or blurring will vary with the particular image; i.e., its size, resolution, content, and anticipated possible misregister. "Content" may relate to either or both scene colors or spatial frequency content. Object blurring in the color separations is not restricted to global blurring; i.e. blurring of the entire image. It may also be done locally in some particular region of interest, depending on scene content. Because the low pass filtering process reduces densities: i.e., they de-saturate colors in the composite image, additional adjustment steps may be taken to return color saturation to more proper levels.

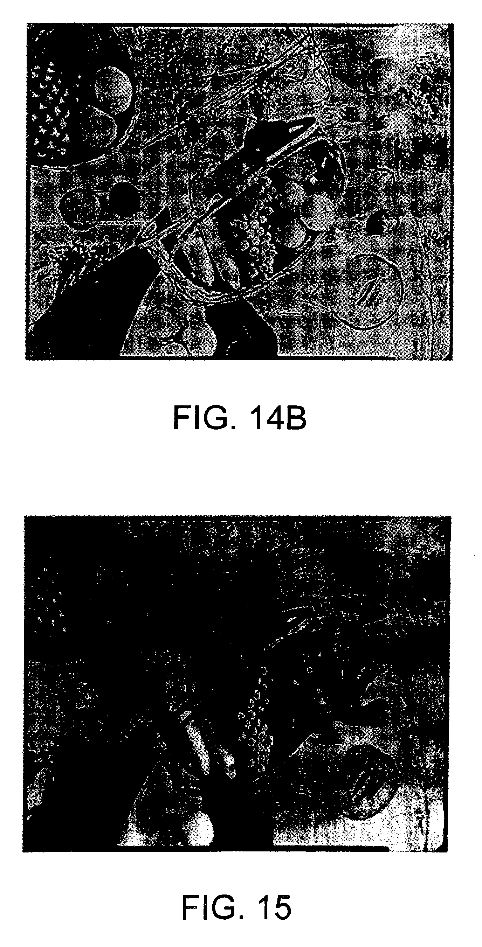

The spot color separation designated as "luminance" is then processed by a high pass filter, such as a traditional unsharp mask (USM) or other image sharpening filters, at block 320. As such, object detail is maintained and preferably even enhanced. It will be appreciated that either the chrominance separations or the luminance separation may be processed first. In the illustrative example, with red and green inks, the green separation was designated the luminance separation and the red separation is the chrominance separation. Accordingly, the red separation is blurred to remove image detail, as best shown in FIGURE 14A, while the green separation is preferably sharpened to accentuate detail, as best shown in FIGURE 14B. FIGURE 14C is the reproduction composite image formed by the filtered separations of FIGURES 14A and 14B. Surprisingly, the recombined images when view as a composite, are remarkably tolerant of misregistration. The unwanted sharp edges, white object borders, multiple images displaced from each other, or odd colors seen in the usual misregistered prints, are generally absent. Some minor halos may be noticed along object edges but these do not command the viewer's attention and are normally not objectionable or not even noticed. It will be appreciated that embodiments of the present invention may only filter the chrominance separations instead of filtering both chrominance and luminance separations, and vice versa.

Embodiments of the present invention do not claim to reproduce color, with respect to the original, with accuracy. However, embodiments of the present invention do preserve the basic hues and luminosity found in the unfiltered source image. After filtering, it yields a pleasing natural-looking image that minimizes or eliminates the obvious undesirable artifacts associated with misregistered separations. Such separations survive the difficult manufacturing environment where tight registration is difficult to achieve.

It should be noted that unlike conventional color separation where image detail is present in all separations (usually *N* = 4 under process printing), methods of the present invention use only one of *N* separations to carry the image detail. Consequently, the need for higher spatial frequencies (detail) in the remaining *N-*1 separations is unnecessary. Carrying image detail in those separations is redundant. More importantly, retaining high spatial frequencies (detail) in these remaining separations would produce image artifacts should the printing plates go out of register. Since methods of the present invention rely on conveying luminance content through only one separation, it is important that essential details of the source image appear in this separation. A visual comparison between the candidate luminance separation and the L* separation of the original image provides an excellent method for identifying the best selection based on similarity. A more detailed description of why this process is successful may be found under the heading "Characteristics of the Human Visual System."

With conventional CMYK process printing, as many as four superposed inks might be applied to render the color of a given half-tone dot. This practice requires that all four ink planes be in perfect register to render the color properly. One optional advantage of the methods of the present invention is that a fewer number of inks may be used to achieve a satisfactory color rendition. If the number of ink planes can be minimized, this effectively reduces the ink's misregistration degrees of freedom at the time of printing. By printing with fewer inks, the penalty for a color separation being out of register is reduced.

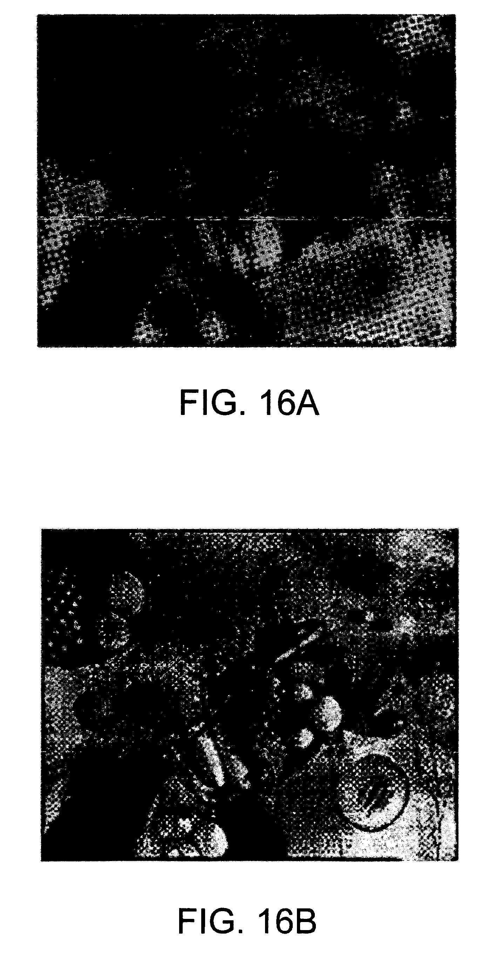

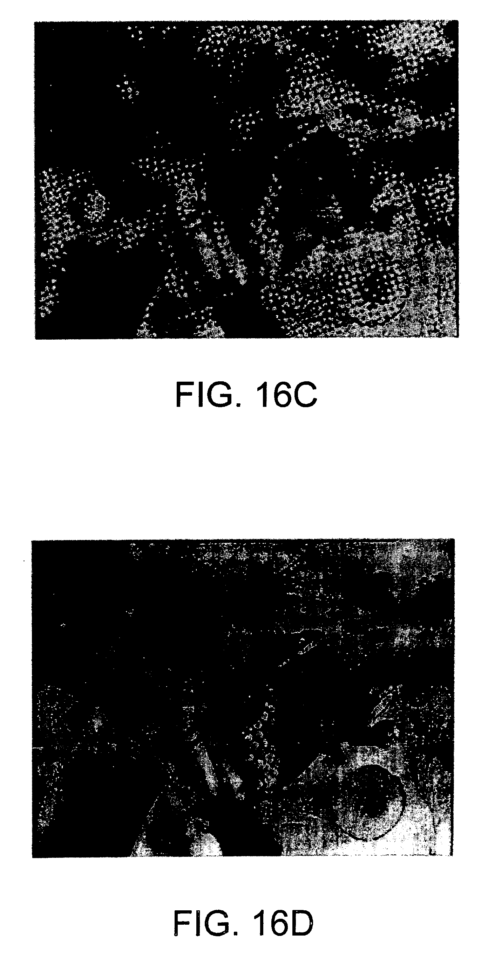

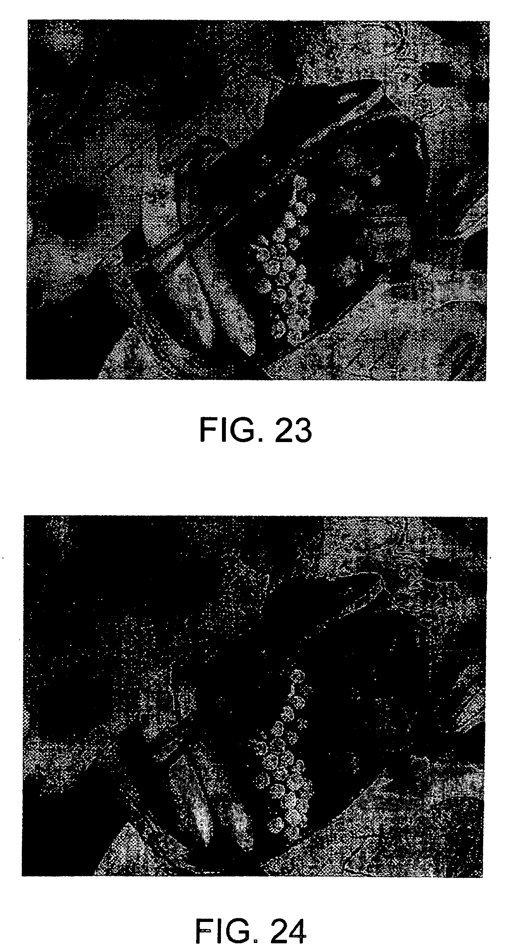

All of the processed spot color separations may then be used in the normal manner for preparation of printing plates. The results of the half-tone screens and reproduction composite images rendered by the half tone screens will now be described with reference to FIGURES 16-24.

Before the results are fully described, it should be noted that given an AM screen, the largest dot (100% ink coverage) has an effective diameter of 1/[*ƒ**√π], where *ƒ* is the screen frequency. With a conventional screen, dot size for a given ink percentage can always be calculated since size is proportional to ink coverage. Recall that stochastic screens are aperiodic. Dot size for an FM element can not be inferred from screen frequency since it is screenless. One way to arrive at an element size for an FM dot is to calculate the size of the "minimum dot" for an AM screen and assign that dimension to be the element size. Since this is a physical limitation of the plate, this approach provides an upper bound on the achievable resolution of a stochastic screen. For discussion purposes, all AM-screened examples will use a 45 lpi frequency. With this in mind, if the shape of the FM dot is round, then its diameter based on this minimum dot, will be √{α/π}/f, where α=0.05, the fractional ink coverage or 0.0028" (71 µ). If the element shape is square, given that the dot area is fixed, its length will be √(π/4) times the diameter of a round dot. Therefore if square dots are used then dot length will be 0.00248" or 63 µ. This suggests that the maximum stochastic screen resolution associated with a 45 lpi screen, using a round dot is about 360 dpi (1/0.00280"=357 dpi) and with a square dot, about 400 dpi (1/0.00248"=402 dpi). Because Photoshop®'s error diffusion algorithm generates bitmaps having square pixels, all the stochastically screened examples in this paper have been rendered to 400 dpi. Again, while we have employed square dots, the screening method is not limited by dot shape. Round, elliptical, or any other dot shape could be used as the element shape.

FIGURE 16D is the two-color digitally filtered continuous-tone composite image on Kraft paper from FIGURE 15. FIGURE 16C is a 45 lpi half-tone composite image using Photoshop®'s screening algorithms, with the respective half-tone separation positives shown in FIGURES 16A and 16B. A screen frequency of 45 lpi was used with round dots at 45° and 75 ° screen angles for the green and red separations, respectively. To maintain a common simulated reproduction environment, all separations and composites (digital image files) regardless of screening method were rendered to a file resolution of 400 pixels per inch.

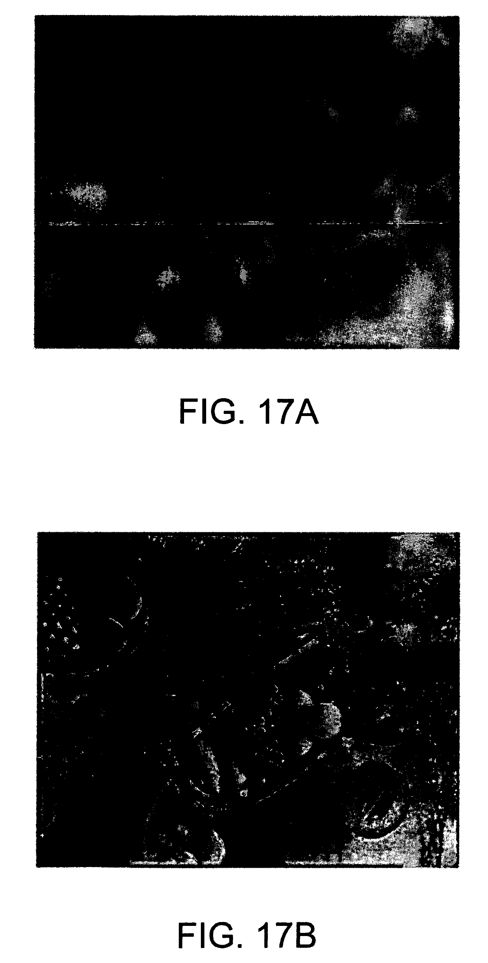

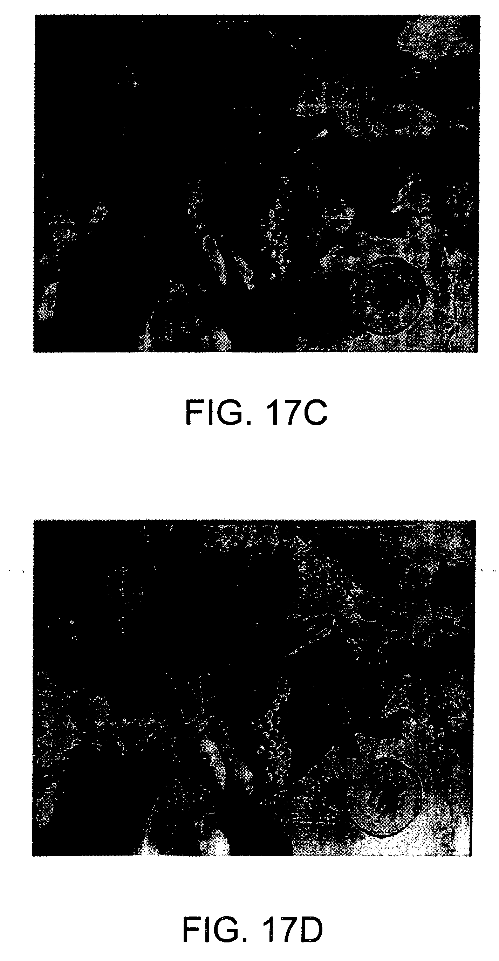

FIGURE 17D is the two-color digitally filtered continuous-tone composite image on Kraft paper from FIGURE 15. FIGURE 17C is a 400 dpi half-tone composite image using Photoshop®'s error diffusion algorithm, with the respective separation positives shown in FIGURES 17A and 17B.

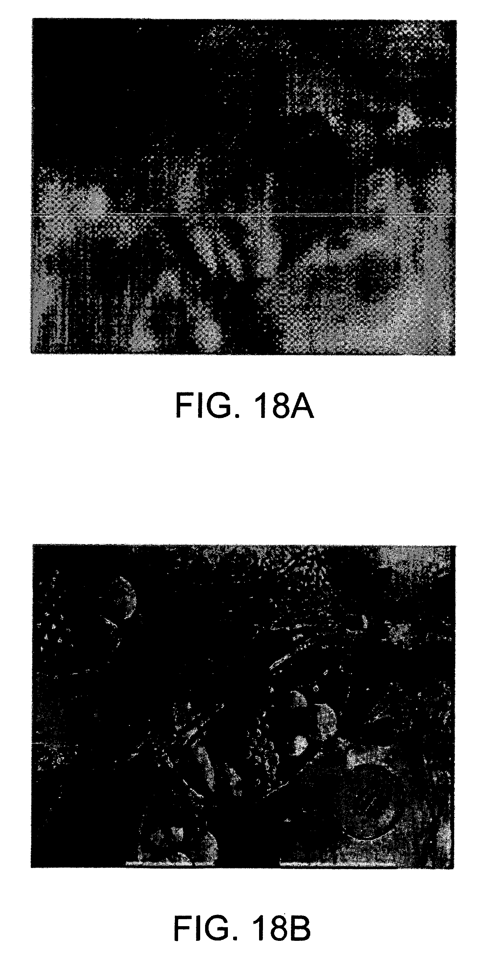

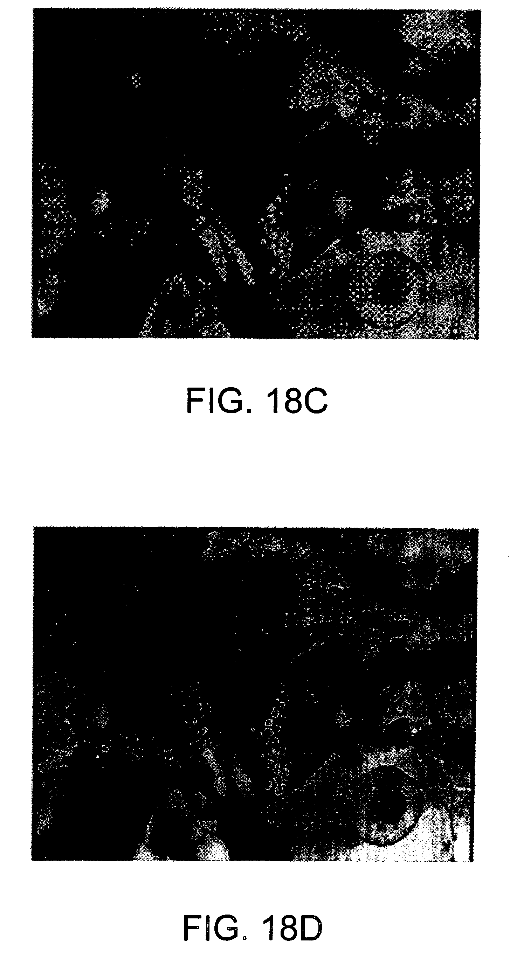

FIGURE 18D is the two-color digitally filtered composite image on Kraft paper from FIGURE 15. FIGURE 18C is a HYBRID A half-tone composite using Photoshop®'s algorithms, with the respective HYBRID A half-tone separation positives shown in FIGURES 18A and 18B. The luminance separation positive (green, FIGURE 18B) was FM-screened at 400 dpi while the chrominance separation positive (red, FIGURE 18A) was AM-screened at 45 lpi.

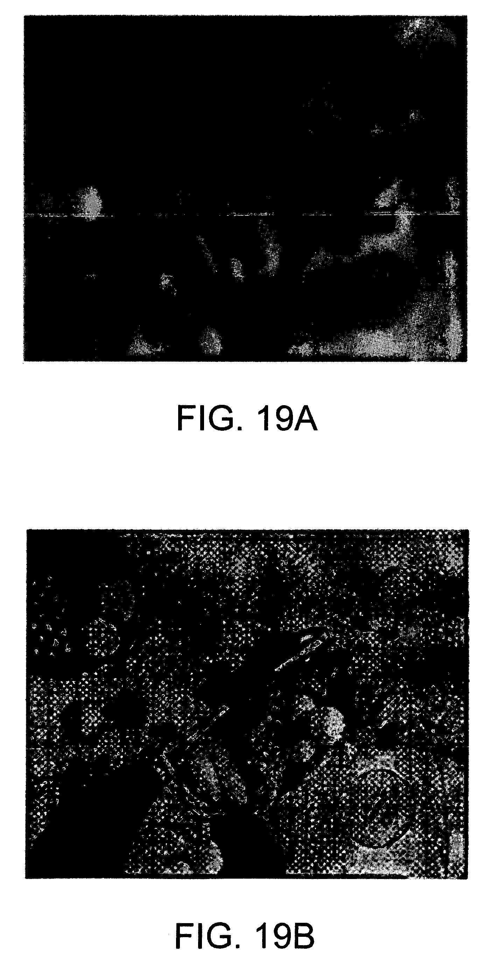

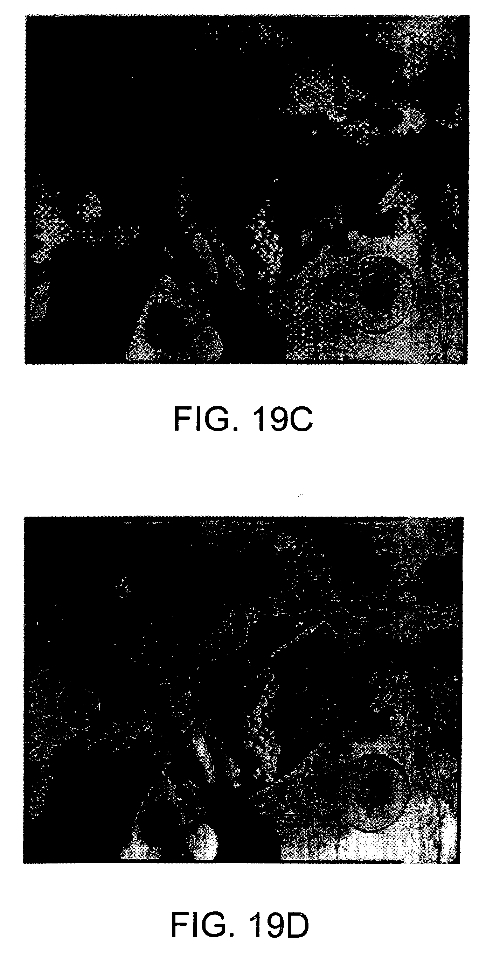

FIGURE 19D is the two-color digitally filtered composite image on Kraft paper from FIGURE 15. FIGURE 19C is a HYBRID B half-tone composite using Photoshop®'s algorithms, with the respective HYBRID B half-tone separation positives shown in FIGURES 19A and 19B. The luminance separation positive (green, FIGURE 19B) was AM-screened at 45 lpi while the chrominance separation positive (red, FIGURE 19A) was FM-screened at 400 dpi.

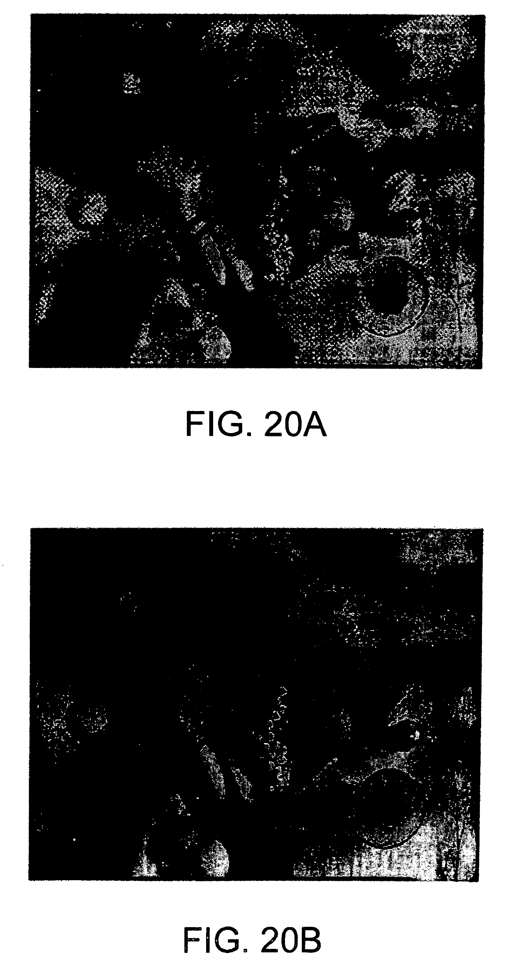

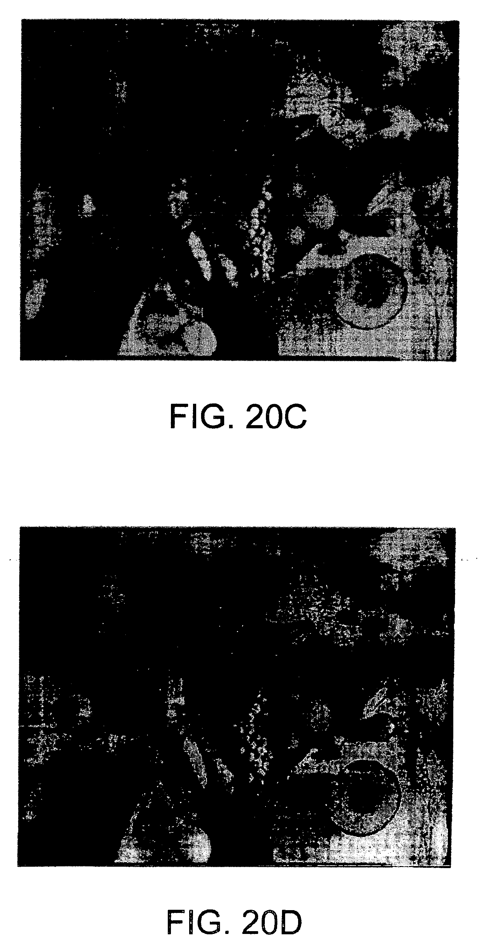

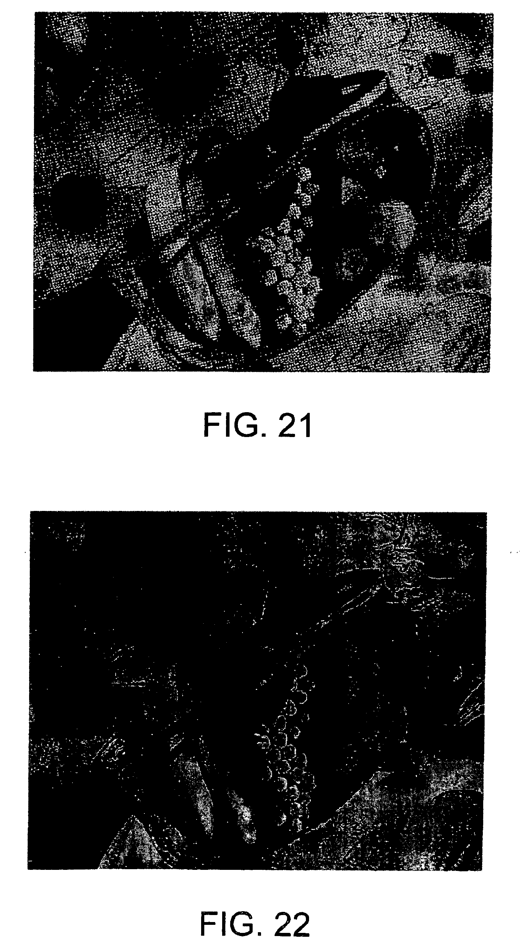

FIGURES 20A-20D compare the four screening scenarios featured in FIGURES 16-19. While the digitally printed images of FIGURES 20A-20D are somewhat smaller than actual size (6" x 4.8"), even at reduced size, the simulated differences are noticeable and results vary with each method. With the AM method, the periodicity of the 45 lpi screen is visible and the high frequency rosette pattern common to this method screening is present. The simulated composite image does not look as continuous-tone as its FM counterpart does. Notice that the stochastically screened composite renders almost continuous-tone and is clearly absent of moiré. If the bananas of FIGURES 20A-20D are examined closely (even more pronounced in FIGURES 21-24), the tonal rendering of the highlights in the banana is good to excellent in the FM version but poor to fair in the AM. Likewise, even the HYBRID versions render better than the AM version. While the HYBRID examples exhibit periodicity, there is no chance for moiré since multiple screens can't interfere, and of course, no high-frequency rosette patterns exist. While in practice greater dot gain will occur with stochastic screens, this non-linearity can be corrected for prior to generating separations by "cutting back" the separations an expected amount based on press characteristics. FM screens generate higher dot gain because the total perimeter of the many stochastic dots printed to render a given halftone cell is considerably larger than the perimeter of a single large dot used to render the same cell area. Consequently, higher dot gain implies greater ink cutback in the separations in order to compensate for such behavior on the press. Therefore, higher cutback implies less ink usage since some density can be generated passively from the optical dot gain that will occur. Hence, the FM screening methodologies not only improve print quality but reduce ink consumption since this method exploits the higher optical gain (above and beyond physical dot gain) resulting from the ink-paper-light interaction. With less ink and a reduction in total ink limit (less liquid on paper), there is also the possibility for faster drying and increased machine speeds. For the purposes of this discussion, we have omitted this dot cutback step. Similarly, for simplicity, we have not performed any "minimum dot" correction to the separations. In the AM-screened examples, 5% and smaller dots appear in the separations. On the press, no dots smaller that 5% would have been present. With the FM-screened examples, no dot in any separation is smaller than 5%.

FIGURES 21-24 is similar to FIGURES 20A-20D, respectively, except that a magnified view of the center region has been displayed to highlight the differences in image sharpness, color fidelity and tonal range/resolution amongst the different screening techniques. Under magnification, it is much easier to see the underlying differences with each technique. The FM composite renders the best continuous-tone reproduction and exhibits no periodicity and moiré. All things being equal, it also achieves the sharpest reproduction. Subtle image elements are visible, especially the "seeds" in the cantaloupe and the edges of the individual grapes. The error diffusion screening algorithm tends to preserve high frequency content more so than conventional methods. While we have provided a demonstration using the error diffusion algorithm, the method is not so restricted, other FM screening algorithms are within the scope of the invention. Close behind are the two HYBRID approaches. While both introduce a modest degree of periodicity and hence some coarseness, both perform better than the AM route. Tonal depth in the highlights is still better and image sharpness is still noticeably better than its AM counterpart. The above are simple illustrations of the improvement in tonal range/resolution, image sharpness and color fidelity one can achieve with stochastic and hybrid screening techniques applied to non-process spot color separations generated by methods of the present invention.

As is readily apparent from the detailed description herein, embodiments of the present invention are focused on the application of FM screening techniques to the filtered and unfiltered continuous-tone spot color separations. While conventional AM half-tone screens can be used, it is the application of FM screening solutions which offers the potential for boosting image fidelity beyond that which is achievable with AM methods. This improvement in print quality yields sharper images, increased tonal range, greater tonal depth or resolution, reduction in ink consumption and the possibility for printing at higher speeds.

FIGURE 4 illustrates another embodiment of the present invention. The method 400 illustrated in FIGURE 4 is substantially identical to the method 100 described above except for the differences that will now be described. Specifically, the misregistration tolerance subprocess 300 of the method 100 is omitted. Thus, once the spot color separations at block 408 are generated, they may be half-tone screened at block 412.

### D. Characteristics of the Human Visual System

Embodiments of the present invention exploit the unique characteristics of the human visual system. A brief review of the human visual system, specifically the acuity characteristics of black & white (luminance) and color vision (chrominance), is useful to understanding aspects of the present invention. A large body of literature in the field of vision research has shown that contrast sensitivity to luminance and chrominance are considerably different. Objects can be better distinguished from each other or their background, if the difference in luminance or chrominance is large. Of these two factors, however, luminance plays the most important role. Furthermore, it isn't the absolute difference in luminance, which matters but the relative difference. Like most imaging systems, the human visual system attenuates (reduces) image contrast while removing (filtering out) high spatial frequencies in a scene. The term "contrast" is defined as the difference between two luminances divided by their sum. Objects that have small contrast with respect to their background are difficult to distinguish. The reciprocal of the minimum contrast needed for detection of an object is referred to as "contrast sensitivity". Just as temporal frequency refers to how rapidly a signal is vibrating or oscillating with time, i.e. cycles per second, the term "spatial frequency" refers to how an optical signal is varying with distance, i.e. the contrast of a black and white signal in space. Spatial frequency is measured in cycles per mm or equivalently, cycles per degree (cpd) of viewing angle, a viewing-distance independent relative measure.

Investigations of the contrast sensitivity of the human visual system are typically done using test patterns. Typically, sinusoidal patterns are used, as illustrated in FIGURE 27. For a sinusoidal luminance pattern, contrast is defined as the amplitude of the black and white sinusoidal variation divided by its average luminance (mean greyness). This expression is often called "modulation depth" or simply "modulation". The minimum modulation required for the detection of this pattern is referred to as the "modulation threshold". By modulating sinusoidal gratings of varying spatial frequencies (as shown in FIG. 27) and recording what the modulation threshold is at each frequency, the contrast sensitivity function or its equivalent, the modulation transfer function can be determined. Knowledge of the contrast sensitivity function or modulation transfer function is vital in that it not only fully characterizes, but determines the performance and capabilities of the human visual system.

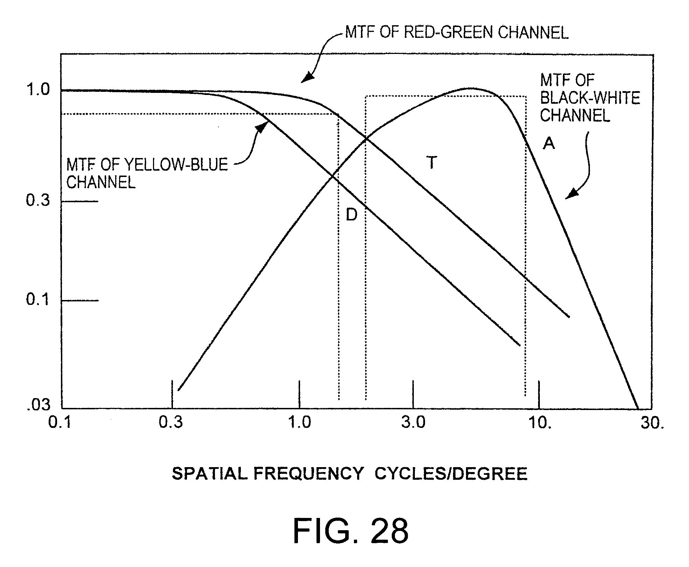

FIGURE 28 is a plot of Granger's chromaticity and luminance modulation transfer functions for the human visual system (Edward Maurice Granger, Ph.D. Dissertation, *Specification of Color Image Quality,* University of Rochester (NY), 1974). The modulation transfer function of the black and white channel (curve labeled "A") which characterizes luminance acuity is essentially *band pass* (dashed box). This pass band is only about two-octaves wide, ranging roughly between 2 - 8 cycles per degree (cpd) of viewing angle. The modulation transfer functions for the red-green and yellow-blue opponent channels (labeled "T" and "D", respectively) characterize the human visual systems chrominance acuity. Chrominance acuity can be modeled as *low pass* (dashed box). While red-green acuity is slightly more sensitive to high spatial frequencies than yellow-blue, the difference is small. In essence, the cutoff frequency for chrominance acuity is roughly one cpd and there is little significant frequency overlap between the chrominance and luminance modulation transfer functions. From FIGURE 28, it is evident that chromatic frequencies beyond the cutoff frequency of 1 cpd cannot be seen. However, achromatic frequencies above 1 cpd are perceptible. Given this processing dichotomy, the removal or absence of high spatial frequencies in the chrominance channels should not be readily discernable to the human eye provided the luminance channel conveys the full spatial frequency content of the original image. In other words, one can filter the frequency content of an image's luminance channel to correspond to the band-pass characteristics of the human visual systems luminance modulation transfer function. The same can be done with the frequency content in the chrominance channels to correspond to the low-pass characteristics of the chrominance modulation transfer functions.

Methods of the present invention attempt to exploit this unique characteristic of the human visual system in the following manner:
(a) by designating a specific ink color separation to serve as the luminance separation;
(b) encoding the designated luminance separation with wide band spatial frequencies;
(c) preferably accentuating the luminance separation's high spatial frequencies to amplify detail;
(d) designating the remaining ink separations to serve as chrominance separations; and
(e) digital filtering to remove the mid to high spatial frequencies in each of the chrominance separations so that they convey only narrow band, low-frequency content.

By properly filtering the appropriate separations according to the human visual system's luminance and chrominance bandwidth characteristics, and then assembling a composite image, the image has been found to appear approximately the same as a reproduction made using conventional separation methods; i.e. without filtering. The theoretical foundation of several methods of the present invention require the separation of a color image's spatial frequency content into two parts. A chromatic component consists of only low spatial frequency content (narrow band). A corresponding luminance component consists of the full spatial frequency content (wide band).

While the preferred embodiments of the invention have been illustrated and described, it will be appreciated that various changes can be made therein without departing from the spirit and scope of the invention. For example, instead of generating spot color separations from CMY source images, Duotone, Tritone, or Quadtone source images may be used.

## Claims

1. A prepress workflow method, comprising:
obtaining a color source image;
generating *N* spot color separations from the color source image, wherein *N* is less than four, the *N* spot color separations, when superimposed, form a reproduction composite image similar in color to the color source image;
screening the *N* spot color separations, wherein at least one of the *N* spot color separations is screened using frequency modulation (FM).

2. A method as claimed in claim 1, wherein generating *N* spot color separations further includes
obtaining cyan, magenta, and yellow image separations from the color source image;
obtaining first and second transparent ink spot colors from a color palette, and
assigning the first and second transparent ink spot colors to first and second image separations chosen from the cyan, magenta, and yellow image separations, thereby forming first and second spot color separations.

3. A method as claimed in claim 1 or claim 2, wherein generating *N* spot color separations further includes
obtaining cyan, magenta, and yellow image separations from the color source image;
determining visually selected dominant object colors of the color source image;
obtaining first and second transparent ink spot colors from a color palette which suitably represent the selected dominant object colors;
selecting first and second image separations from the cyan, magenta, and yellow image separations which represent the two image separations that carry the most color in the color source image; and
assigning the first and second selected transparent ink spot colors to the first and second image separations, respectively, thereby forming first and second spot color separations.

4. A method as claimed in any of claims 1 to 3, wherein the color source image is initially adjusted for at least one property selected from the group consisting of contrast, brightness, color balance, and tonal value prior to generating *N* spot color separations.

5. A method as claimed in any of claims 1 to 4, wherein all of the *N* spot color separations are screened using frequency modulation (FM).

6. A method as claimed in any of claims 1 to 5, wherein screening the *N* spot color separations includes
designating the spot color separation conveying the greatest image detail to be a luminance separation;
assigning the remaining spot color separations as chrominance separations; and
screening either the luminance separation or the chrominance separations using frequency modulation.

7. A method as claimed in any of claims 1 to 6, further including
processing the generated *N* spot color separations to achieve printing misregistration tolerance prior to screening.

8. A prepress workflow method, comprising:
generating *N* spot color separation positives of a digital source image, wherein *N* is less than four; and
screening the processed *N* spot color separation positives, wherein at least one of the *N* spot color separation positives is screened using frequency modulation (FM).

9. A method as claimed in claim 8, further including
processing the generated *N* digital spot color separation positives to achieve printing misregistration tolerance prior to screening.

10. A method as claimed in claim 8 or claim 9, further including:
initially obtaining the digital source image, the digital source image being in CMY encoded format.

11. A method as claimed in any of claims 8 to 10, wherein generating *N* spot color separation positives of a digital source image further includes
obtaining Cyan, Magenta, Yellow image separation positives from the digital source image;
obtaining first and second transparent ink spot colors from a color palette;
selecting first and second image separation positives from the cyan, magenta, and yellow image separation positives which represent the two image separation positives and carry the most color in the digital source image; and
assigning the first and second selected transparent ink spot colors to the first and second image separation positives, respectively, thereby forming first and second spot color separation separations.

12. A method as claimed in any of claims 8 to 11, wherein screening the processed *N* spot color separation positives includes
inverting the *N* spot colour separation positives to create spot color separations prior to screening.

13. A prepress workflow method, comprising:
preparing *N* non-process color separations from a source image;
processing the *N* non-process color separations to achieve printing misregistration tolerance; and
screening the *N* non-process color separations, wherein at least one of the *N* non-process color separations is screened by frequency modulation (FM).

14. A method as claimed in claim 13, wherein processing the generated *N* non-process color separations includes
choosing the non-process color separation conveying the greatest image detail to be a luminance separation;
assigning the remaining non-process color separations as chrominance separations; and
degrading image detail in the chrominance separations.

15. A method as claimed in claim 13 or claim 14, further including
enhancing image detail on the luminance separation.

16. A method as claimed in any of claims 13 to 15, wherein all of the *N* non-process color separations are screened by frequency modulation (FM).

17. A method as claimed in any of claims 13 to 16, wherein screening *N* non-process color separations includes
designating the non-process color separation conveying the greatest image detail to be a luminance separation;
assigning the remaining non-process color separations as chrominance separations; and
screening either the luminance separation or the chrominance separations using frequency modulation (FM);
screening the other of the luminance separation or the chrominance separations using amplitude modulation (AM).
